# EUROPÄISCHE PATENTSCHRIFT

(11) **EP 0 398 841 B1**
(45) Veröffentlichungstag und Bekanntmachung des Hinweises auf die Patenterteilung: **28.07.1993**
(21) Anmeldenummer: 90810329.4
(22) Anmeldetag: 30.04.1990
(51) Int. Cl.: D03D 49/38, F16C 7/00

(54) **Beschleunigungshebel mit kleiner Masse und hoher Festigkeit, insbesondere für Projektilwebmaschinen**
Picking lever with small mass and high strength, especially for dummy shuttle looms
Levier d'accélération avec une petite masse et une grande résistance, plus spécialement pour métiers à projectiles

(30) Priorität: 16.05.1989 CH 1820/89
(43) Veröffentlichungstag der Anmeldung: 22.11.1990
(73) Patentinhaber: GEBRÜDER SULZER AKTIENGESELLSCHAFT, CH-8401 Winterthur (CH)
(72) Erfinder: Just, Christian, CH-8353 Elgg (CH); Müller, Jochen, CH-8461 Oerlingen (CH); Hunziker, Andreas, CH-8606 Nänikon (CH)

(56) Entgegenhaltungen:
- EP-A- 0 001 563
- EP-A- 0 031 413
- CH-A- 349 231
- CH-A- 597 395
- DE-A- 3 317 046
- FR-A- 2 184 613

## Beschreibung

Die Erfindung betrifft einen Beschleunigungshebel mit kleiner Massenträgheit und hoher mechanischer Festigkeit, insbesondere für eine Projektilwebmaschine, aus faserverstärktem Kunststoff mit Nabenteil, Arm und Endpartie. Derartige Beschleunigungshebel oder Schlaghebel in Projektilwebmaschinen wurden bisher aus hochfestem Stahl oder Titan hergestellt. Die metallischen Schlaghebel sind aber relativ schwer, sie erfordern einen hohen Energieaufwand und begrenzen die Leistung der Webmaschine. Aus CH-A- 553 864 bzw. US-A- 3 826 155 ist ein Webmaschinenschlaghebel mit kleinerer Masse bekannt, welcher einen Arm aus faserverstärktem duroplastischem Kunststoff aufweist, mit einer die notwendige Festigkeit erzeugenden Faserschlaufe (40), welche um die Peripherie des Hebelarmes gewickelt ist. Hier besteht der Nabenteil aber notwendigerweise immer noch aus relativ schwerem Stahl. Dieser Beschleunigungshebel mit reduzierter Masse ist jedoch immer noch aufwendig, teuer und nur langsam herstellbar. Ueberdies sind mechanische Festigkeit und Schlagzähigkeit soweit beschränkt, dass noch kein serienmässiger Einsatz bei Hochleistungswebmaschinen erfolgen konnte.

Es ist daher Aufgabe der Erfindung, diese Probleme zu überwinden und einen Beschleunigungshebel zu schaffen, welcher bei wesentlich reduzierter träger Masse bezüglich Rotation um die Nabe unverminderte Festigkeit und Schlagzähigkeit aufweist, welcher hohe Dauerfestigkeiten ohne Delaminationsschäden erreicht und überdies einfach und kostengünstig herstellbar ist. Der Beschleunigungshebel soll sich insbesondere auch als Schlaghebel zur Beschleunigung der Projektile in einer Projektilwebmaschine eignen und dort höhere Projektilgeschwindigkeiten und damit höhere Webleistungen ermöglichen.

Diese Aufgabe wird erfindungsgemäss dadurch gelöst, dass Nabenteil, Arm und Endpartie aus mit hochfesten Fasern verstärktem Thermoplast bestehen, welcher aus mehreren aufeinander gelegten Schichten in Form von Prepregs oder Halbzeugen aufgebaut ist, wobei die Schichten unterschiedliche Faserorientierungen aufweisen und im wesentlichen parallel zur Bewegungsebene liegen, wobei im Arm die Längskomponenten der Faseroriertierungen überwiegen und wobei Nabenteil und Endbereich eine angenähert isotrope Verteilung der Faserorientierungen aufweisen.

Durch den schichtweisen Aufbau aus thermoplastischen Prepregs mit unterschiedlichen Faserorientierungen wird in allen Teilen (Nabe, Arm und Endpartie) eine optimale Anpassung der mechanischen Festigkeit des Verbundwerkstoffes an die dort auftretenden Belastungsrichtungen erreicht, wie auch eine wesentlich höhere Schlagzähigkeit und Dauerfestigkeit als bei den bekannten Duroplasten. Damit werden gleichzeitig eine Massenreduktion und höhere mechanische Festigkeiten erreicht. Durch den einfachen Aufbau von aufeinandergelegten Schichten im wesentlichen parallel zur Bewegungsebene wird zudem noch eine viel einfachere und damit kostengünstigere Herstellung erreicht als bei der bisherigen Technik mit gewickelten duroplastischen Verbundmaterialien. Durch den Wegfall des bisher notwendigen langwierigen Polymerisationsschrittes bei den Duroplasten ist hier nicht nur eine genauer reproduzierbare Herstellung mit höherer und konstanter Qualität, sondern auch wesentlich kürzere Taktzeiten und damit überhaupt erst grössere Serien herstellbar.

Die abhängigen Ansprüche betreffen vorteilhafte Ausführungen der Erfindung. Danach können als besonders geeignet Endloskohlefasern und Thermoplaste wie PEEK oder PPS eingesetzt werden. Schichten aus uni-direktionalen Gelegen und mit einem hohen Faseranteil von mindestens 50 Vol. % ergeben maximale spezifische Festigkeiten und minimale Massenträgheit. Zur Aufnahme eines Bolzens eines Verbindungsteils kann die Endpartie des Beschleunigungshebels ein Auge aufweisen, wobei der Verbundwerkstoff selber als Lager dient und damit eine bisher notwendige relativ schwere Hartmetalllagerbüchse überflüssig wird. Durch die erfindungsgemässe Anordnung der Faserorientierung liegt immer ein Anteil an Fasern senkrecht zur Bohrungsoberfläche des Auges, womit eine Eigenschmierung erzielt wird und zusätzlich die bisher notwendigen Schmierstoffe entfallen. Zum direkten Abschuss eines Projektils mit dem Schlaghebel ohne ein mit dem Auge verbundenes separates Schlagstück, kann ein kleines, verschleissarmes Schlagstück direkt in die Endpartie eingebaut sein. Der Arm kann der mechanischen Belastung entsprechend flach, gekrümmt, schalig und konisch oder zylindrisch verlaufend ausgebildet sein. Für besonders hohe Steifigkeiten kann auch ein Kastenprofil gebildet werden. Einfache und leichte Nabenbefestigungen können in Radialform mit einem Keilring und in Axialform mit einer Konusscheibe gebildet werden.

Im folgenden wird die Erfindung anhand von Ausführungsbeispielen im Zusammenhang mit den Figuren näher erläutert. Es zeigen:
- Fig. 1: einen erfindungsgemässen Schlaghebel in zwei Ansichten mit Schichtanordnung und Faserorientierungen,
- Fig. 2: einen Schichtaufbau mit unterschiedlichen Faserorientierungen,
- Fig. 3: einen Endbereich mit versetztem Auge,
- Fig. 4,5: polygonale Anordnungen der Faserorientierungen der Schichten,
- Fig. 6: einen Schlaghebel einer Projektilwebmaschine mit integriertem Schlagstück im Endbereich,
- Fig. 7: verschiedene Beispiele von Beschleunigungshebelarmen,
- Fig. 8: ein kastenförmiges Armprofil,
- Fig. 9: eine radiale Nabenbefestigung und
- Fig. 10: eine axiale Nabenbefestigung

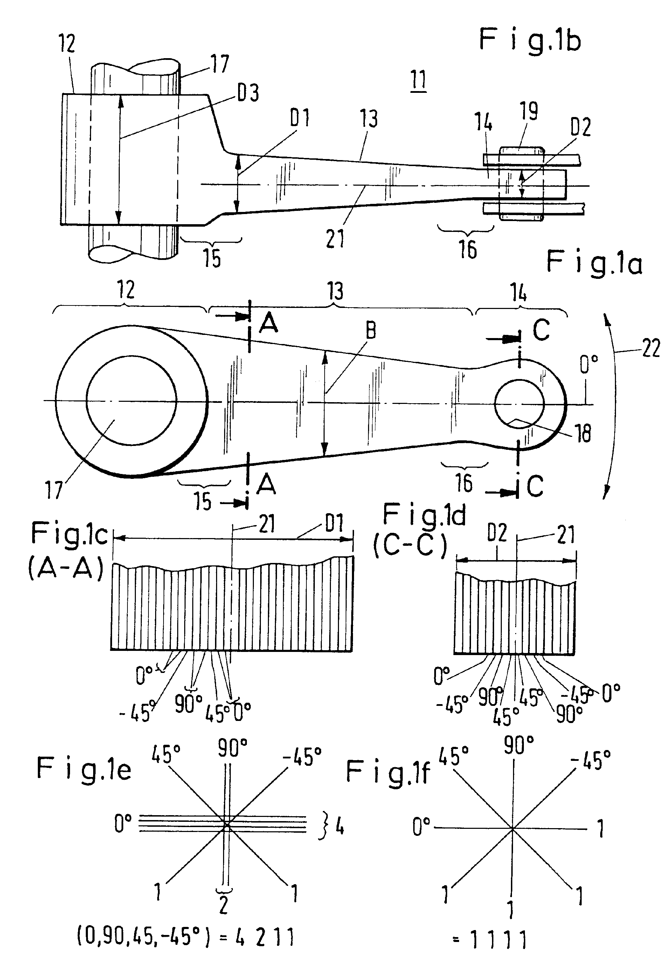

Fig. 1a, b zeigen einen erfindungsgemässen Beschleunigungshebel 11 in zwei Ansichten mit einem Nabenteil 12 auf einer Antriebswelle 17, einem Arm 13 und einer Endpartie 14. Die Endpartie weist ein Auge 18 auf, z.B. zur Aufnahme eines Bolzens 19, über den ein zu beschleunigendes Teil mit dem Hebel 11 verbunden werden kann. Der Beschleunigungshebel 11 bewegt sich um die Welle 17 in Bewegungsrichtung 22 in der Ebene 21, welche hier zugleich Symmetrieebene für den Arm 13 und die Endpartie 14 mit Auge 18 darstellt.

Fig. 1c bis 1f zeigen je im Armbereich 13 und im Endbereich 14 den Aufbau und die Faserorientierungen der einzelnen Schichten, aus denen der Hebel 11 aufgebaut ist.

Die Schichten sind symmetrisch zur Bewegungsebene 21 angeordnet und liegen im wesentlichen parallel zur Ebene 21. Die Faserorientierungen der Schichten liegen in den Richtungen 0, 90, 45, -45° in der Ebene 21. Im Arm 13 überwiegen die Längskomponenten (Richtung 0°) mit einer Schichtverteilung von (0, 90, 45, -45°) = 4 2 1 1, d.h. jeweils vier Schichten in Richtung 0°, zwei Schichten in Richtung 90° und je eine Schicht in Richtung 45 und -45° bilden eine Schichtperiode (Fig. 1c, e). In der Endpartie 14 mit Auge 18 liegt dagegen eine angenähert isotrope Verteilung der Faserorientierungen vor, mit (0, 90, 45, -45°) = 1 1 1 1, d.h. immer je eine Schicht in jede Richtung. Dabei sind hier aufeinanderfolgende Schichten immer um 45° verdreht, also ab Symmetrieebene 21: 0, 45, 90, -45, 0°. Diese Periode wird mehrmals wiederholt, bis die gewünschte optimale Hebeldicke D erreicht ist. Zur optimalen beanspruchungsgerechten Ausformung ist der Hebel 11 sowohl in der Breite B, als auch in der Dicke D gegen das Auge hin verjüngt. Bei einer relativ geringen Dicke der einzelnen Schichten von vorzugsweise 0.1 bis 0.3 mm, also z.B. 0.2 mm und Hebeldicken von D1 = 8, D2 = 4 und D3 = 30 mm ergeben sich entsprechend 40, 20 und 150 Einzelschichten an den entsprechenden Orten. Durch diese relativ grosse Anzahl von Einzelschichten ergibt sich eine gleichmässige und kontinuierliche, optimale Verteilung der mechanischen Eigenschaften des ganzen Faserverbunds. Damit wird auch das Problem von lokalen Schwachstellen und Delaminationen überwunden.

Die Nabenpartie 12 ist wiederum quasi isotrop aufgebaut wie die Endpartie 14 mit (0, 90, 45, -45°) = 1 1 1 1, jedoch in einer wesentlich grösseren Dicke D3. In den Uebergangsbereichen 15 zwischen Arm und Nabe, sowie 16 zwischen Arm und Endpartie, erfolgt ein gradueller, allmählicher Uebergang des Schichtaufbaus von 4 2 1 1 auf 1 1 1 1; also z.B. über die Zwischenstufen 3 2 1 1, 2 2 1 1, 2 1 1 1.

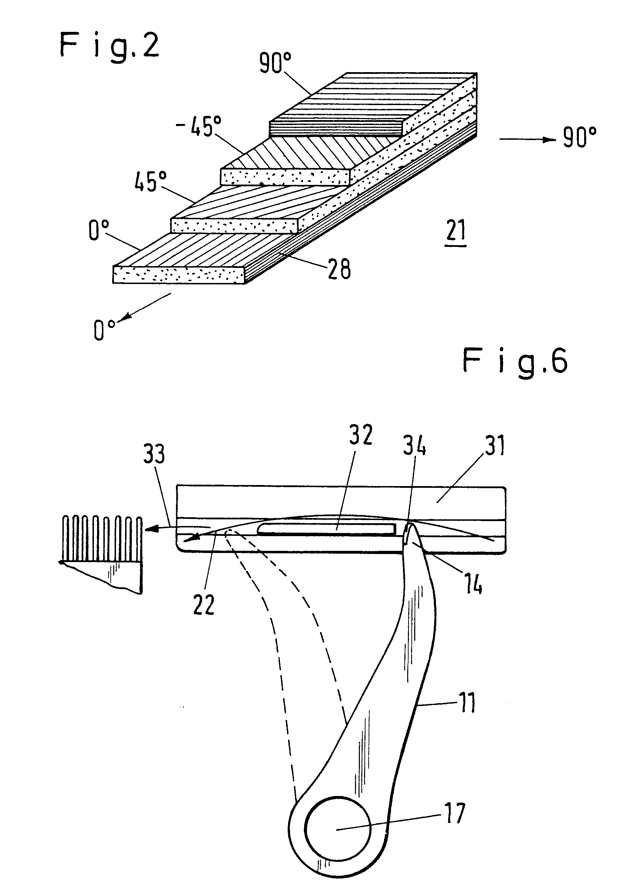

Fig. 2 zeigt perspektivisch ein Beispiel eines Schichtaufbaus parallel zur Bewegungsebene 21 mit periodisch je einer Schicht in 0, 45, -45 und 90° Richtung.

Die Herstellung eines Beschleunigungshebels kann in folgender einfacher Weise erfolgen:
- Zuschneiden und Aufbau der Einzelschichten mit optimaler Form, Anzahl, Faserorientierungen und Reihenfolge aus faserverstärkten thermoplastischen Prepregs oder Halbzeugen
- Aufheizen
- plastische Verformung unter Druck in einer Presse und kurzes Abkühlen
- Entformung und allfällige Weiterbearbeitung in kaltem Zustand, wobei auch eine zerspanende Bearbeitung möglich ist. Diese Herstellungsweise ermöglicht kurze Taktzeiten und damit auch grössere Serien.

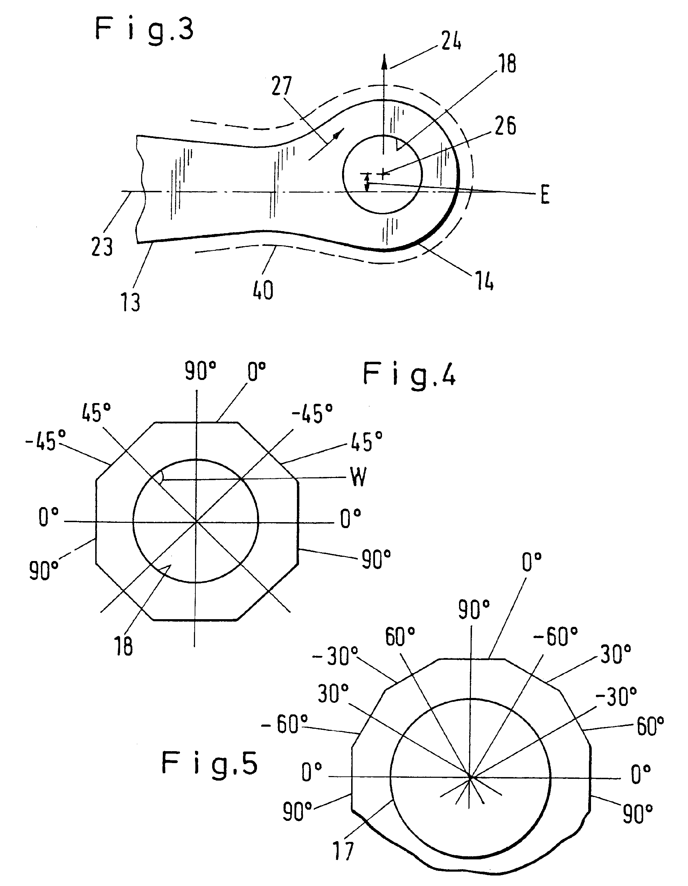

Fig. 3 zeigt eine Endpartie 14 eines Beschleunigungshebels mit einem aus der Armmittelebene 23 um einen Betrag E in Hauptbelastungsrichtung 24 versetzten Augenzentrum 26. Dadurch können die am stärksten belasteten Stellen des Beschleunigungshebels auf Zug (27) und nicht auf Druck beansprucht werden. Die Zugfestigkeit der faserverstärkten Thermoplaste ist höher als die Druckfestigkeit.

Fig. 4 und 5 zeigen Beispiele polygonaler Anordnungen der Schicht-Faserorientierungen. In Fig. 4 beträgt die Winkeländerung der Faserorientierung von einer Schicht zur nächsten 45°, entsprechend einem Achteck. In Fig. 5 beträgt die Winkeländerung 30°, entsprechend einem Zwölfeck. In den isotropen Bereichen von Endpartie mit Auge und Nabenteil mit je einer Schicht in jeder Richtung ergeben sich nach Fig. 4 Orientierungen: 0, 45, 90, -45° mit Anzahl Schichten: 1 1 1 1 und nach Fig. 5 Orientierungen 0, 30, 60, 90, -60, -30°, mit Anzahl Schichten: 1 1 1 1 1 1.

Im Bereich des Arms 13 mit Ueberwiegen der Längskomponenten in Richtung 0° ergeben sich z.B.
(0, 30, 60, 90, -60, -30°) = 6 1 1 2 1 1 Schichten. Die Reihenfolge im Aufbau einer Schichtperiode kann dabei sein: zweimal 0°, einmal 30°, einmal 60°, zweimal 90°, zweimal 0°, einmal -60°, einmal -30°. Wie aus den Figuren ersichtlich ist, bilden diese Schichtanordnungen eine polygonartige Annäherung der Faserorientierungen an die Kreisform des Auges 18 im Endbereich bzw. der Welle 17 im Nabenteil. Damit wird auch die bisher notwendige aufwendige und heikle Faserschlaufe 40 bei gewickelten duroplastischen Hebeln (gestrichelte Linie in Fig. 3) auf einfache Art und mit resultierenden überlegenen mechanischen Eigenschaften ersetzt. Ein zusätzlicher, sehr wesentlicher Vorteil liegt beim erfindungsgemässen Schichtaufbau auch darin, dass immer ein Faseranteil annähernd senkrecht in einen Winkel W zur Oberfläche des Auges 18 steht. Damit wird durch diese Fasern, vor allem bei Kohlefaserverstärkung, gleichzeitig auch noch die notwendige Dauerschmierung im Auge 18 bezüglich eines darin drehbaren Bolzens 19 erzielt. Die Einsparung einer bisher notwendigen Hartmetallbüchse in der Endpartie sowie der Schmierung reduziert sowohl die träge Masse als auch den Serviceaufwand erheblich.

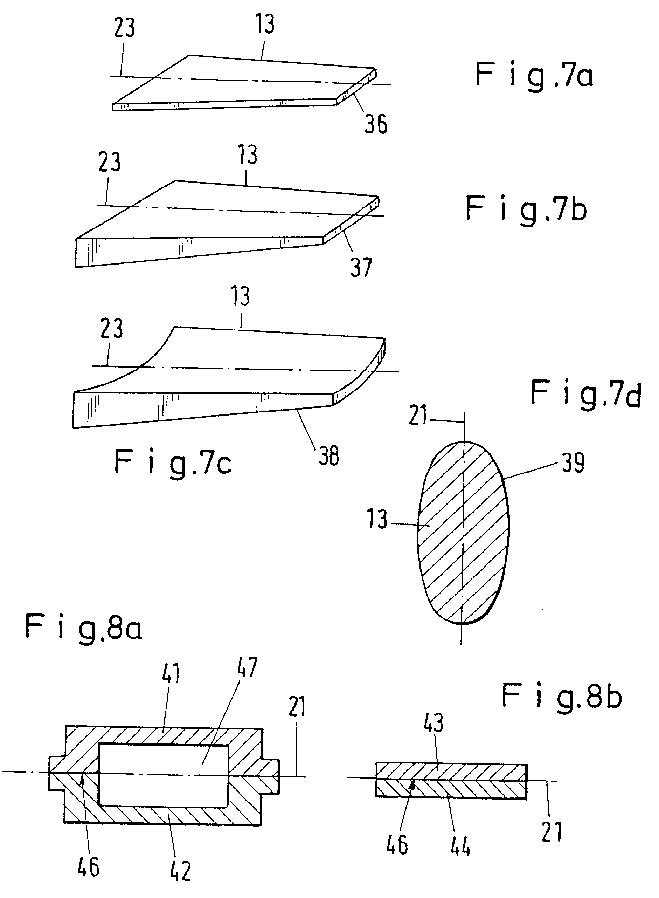

Fig. 6 zeigt einen erfindungsgemässen Beschleunigungshebel als Schlaghebel in einer Projektilwebmaschine, wobei hier ein direkter Abschuss des Projektils ohne angelaschtes separates Schlagstück stattfindet. Dazu ist in den Endbereich 14 ein verschleissarmes Schlagstück 34, z.B. ein Hartmetallplättchen, direkt eingebaut. Bei Betätigung des Schlaghebels 11 durch die Welle 17 beschleunigt das integrierte Schlagstück 34 das Projektil 32 längs einer Führung 31 in Richtung 33 zum Webfach. Damit kann die Webmaschinenleistung weiter gesteigert, der Energieverbrauch und auch der Lärm wesentlich reduziert werden.

Die Fig. 7a bis d zeigen verschiedene mögliche Ausführungen von Beschleunigungshebelarmen 13. Zur optimalen Anpassung an gegebene mechanische Belastungen kann der Arm flach verjüngt 36, flach konisch 37, schalig konisch 38 oder auch in Querschnitt zylindrisch 39 ausgeführt sein.

Nach Fig. 8 kann auch durch kastenförmige Ausformung ein besonders steifer und leichter Beschleunigungshebel realisiert werden, z.B. zusammengesetzt aus zwei Halbschalen. Diese Halbschalen 41, 42 enthalten im Armbereich einen Hohlraum 47, welcher im Augenbereich wieder verschwindet, so dass dort die Halbschalen 43, 44 wieder ein Vollprofil bilden. Die thermoplastischen Halbschalen 41, 42, 43, 44 können dabei auf einfache und sichere Art an den Verbindungsflächen 46 zusammengeschweisst werden, beispielsweise durch Spiegelschweissen. Der Hohlraum 47 kann zur Schwingungsdämpfung oder zur Versteifung auch mit einem leichten Füllmaterial wie elastische Schaumstoffe oder mit einer Wabenstruktur gefüllt sein.

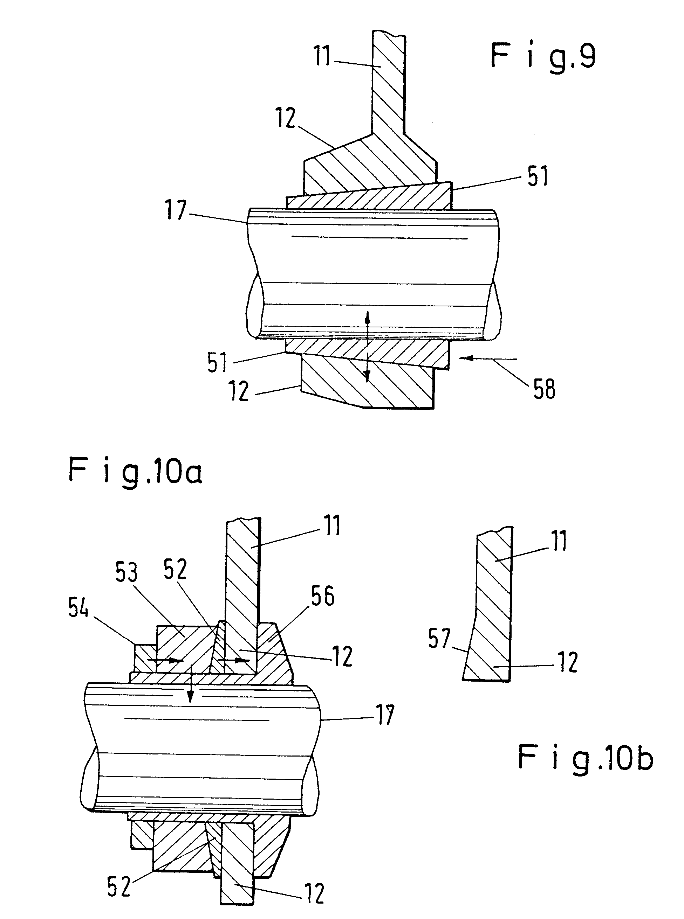

Fig. 9 zeigt eine radiale Nabenbefestigung mit einem Keilring 51 zur schlupffreien Fixierung des Beschleunigungshebels 11 auf der Welle 17 mittels Haftreibungskräften. Zur Fixierung des Beschleunigungshebels in der gewünschten Lage wird dabei der Keilring 51 durch eine nicht gezeichnete abnehmbare Montageeinrichtung in Spannrichtung 58 bewegt, beispielsweise mittels Oeldruckverpressung. Dies ergibt eine besonders massearme Befestigung.

Fig. 10 zeigt eine axiale Nabenbefestigung mit einer Konusscheibe 52. Mittels einer Pressmutter 54 und eines Klemmringes 53 wird dabei sowohl der gegen eine Pressnabe 56 abgestützte Schlaghebel 11 als auch die Pressnabe selber auf der Welle 17 durch Haftreibungskräfte fixiert und gehalten. In einer vereinfachten Version kann die Konusscheibe 52 durch entsprechende Ausformung 57 auch durch den Nabenteil 12 des Beschleunigungshebels selber gebildet werden.

## Patentansprüche

1. Beschleunigungshebel (11) mit kleiner Massenträgheit und hoher mechanischer Festigkeit, insbesondere für eine Projektilwebmaschine, aus faserverstärktem Kunststoff mit Nabenteil, Arm und Endpartie,
dadurch gekennzeichnet, dass Nabenteil (12), Arm (13) und Endpartie (14) aus mit hochfesten Fasern verstärktem Thermoplast bestehen, welcher aus mehreren aufeinander gelegten Schichten in Form von Prepregs oder Halbzeugen aufgebaut ist, wobei die Schichten unterschiedliche Faserorientierungen aufweisen und im wesentlichen parallel zur Bewegungsebene (21) liegen, wobei im Arm (13) die Längskomponenten der Faserorientierungen überwiegen und wobei der Nabenteil (12) und der Endbereich (14) eine angenähert isotrope Verteilung der Faserorientierungen aufweisen.

2. Beschleunigungshebel nach Anspruch 1, dadurch gekennzeichnet, dass die Faserorinetierungen der Schichten abwechselnd und im wesentlichen symmetrisch zur Bewegungsebene (21) angeordnet sind.

3. Beschleunigungshebel nach Anspruch 1, dadurch gekennzeichnet, dass der Thermoplast mit endlos Kohlefasern verstärkt ist.

4. Beschleunigungshebel nach Anspruch 1, dadurch gekennzeichnet, dass die Schichten aus uni-direktionalen Gelegen mit einem Faseranteil von mindestens 50 Vol.-% bestehen.

5. Beschleunigungshebel nach Anspruch 1, dadurch gekennzeichnet, dass als Thermoplast PEEK oder PPS vorgesehen ist.

6. Beschleunigungshebel nach Anspruch 1, dadurch gekennzeichnet, dass die Endpartie ein Auge (18) zur Aufnahme eines Bolzens aufweist, wobei das Auge auch als Lagerbüchse für den Bolzen dient.

7. Beschleunigungshebel nach Anspruch 6, dadurch gekennzeichnet, dass das Auge in der Endpartie in Hauptbelastungsrichtung versetzt angeordnet ist.

8. Beschleunigungshebel nach Anspruch 1, dadurch gekennzeichnet, dass in die Endpartie ein verschleissarmes Schlagstück (34) eingebaut ist zum direkten Abschuss eines Projektils (32).

9. Beschleunigungshebel nach Anspruch 1, dadurch gekennzeichnet, dass der Arm flach, gekrümmt oder schalig ausgebildet ist, und dass er konisch oder zylindrisch verläuft.

10. Beschleunigungshebel nach Anspruch 1, dadurch gekennzeichnet, dass der Arm als Kastenprofil ausgebildet ist.

11. Beschleunigungshebel nach Anspruch 1, dadurch gekennzeichnet, dass eine radiale Nabenbefestigung mit einem Keilring (51) vorgesehen ist.

12. Beschleunigungshebel nach Anspruch 1, dadurch gekennzeichnet, dass eine axiale Nabenbefestigung mit einer Konusscheibe (52) vorgesehen ist.

13. Beschleunigungshebel nach Anspruch 1, dadurch gekennzeichnet, dass die Dicke der einzelnen Schichten höchstens 0,3 mm beträgt.

14. Beschleunigungshebel nach Anspruch 1, dadurch gekennzeichnet, dass die Faserorientierungen der Schichten zueinander polygonartig angeordnet sind.

15. Projektilwebmaschine mit einem Beschleunigungshebel nach einem der Ansprüche 1 bis 14 zum Beschleunigen des Projektils (32).

## Claims

1. A lightweight high-mechanical-strength accelerating lever (11), more particularly for a projectile loom, made of fibre-reinforced plastic and comprising a hub part, an arm and an end part, characterised in that the hub part (12), arm (13) and end part (14) are made of high-strength-fibre-reinforced thermoplastic built up from a number of layers one above another in the form of prepregs or semifinisheds, the layers having different fibre orientations and being disposed substantially parallel to the plane of movement (21), longitudinal components of the fibre orientations predominating in the arm while the hub part (12) and the end zone (14) have a substantially isotropic distribution of the fibre orientations.

2. A lever according to claim 1, characterised in that the fibre orientations of the layers are disposed alternately and substantially symmetrically of the movement plane (21).

3. A lever according to claim 1, characterised in that the thermoplastic is reinforced with endless carbon fibres.

4. A lever according to claim 1, characterised in that the layers are unidirectional structures having an at least 50 volume-% fibre component.

5. A lever according to claim 1, characterised in that PEEK or PPS is provided as thermoplastic.

6. A lever according to claim 1, characterised in that the end part has an eye (18) adapted to receive a pin and also effective as bearing lining therefor.

7. A lever according to claim 6, characterised in that the eye is disposed in the end part with an offset in the main stress direction.

8. A lever according to claim 1, characterised in that a wear-resistant picking element (34) for direct picking of a projectile (32) is disposed in the end part.

9. A lever according to claim 1, characterised in that the arm is flat or curved or shell-like and extends conically or cylindrically.

10. A lever according to claim 1, characterised in that the arm is a box section member.

11. A lever according to claim 1, characterised in that a radial hub securing by means of a tapered ring (51) is provided.

12. A lever according to claim 1, characterised in that an axial hub securing by means of a conical disc (52) is provided.

13. A lever according to claim 1, characterised in that the thickness of the discrete layers is at most 0.3 mm.

14. A lever according to claim 1, characterised in that the fibre orientations of the layers are disposed polygon-fashion relatively to one another.

15. A projectile loom having an accelerating lever according to any of claims 1 - 14 to accelerate the projectile (32).

## Revendications

1. Levier (11) d'accélération à faible inertie massique et à grande résistance mécanique, en particulier pour machine à tisser à projectiles, en matière plastique armée de fibres et comprenant une partie formant moyeu, un bras et une partie extrême, caractérisé en ce que la partie (12) formant moyeu, le bras (13) et la partie extrême (14) sont en matière thermoplastique armée de fibres à grande résistance et constituée de plusieurs couches superposées en forme de feuilles pré-imprégnées ou de produits semi-finis, les couches ayant des orientations différentes des fibres et étant sensiblement parallèles au plan du mouvement (21), les composantes longitudinales des orientations des fibres étant prépondérantes dans le bras (13) et la partie (12) formant moyeu et la partie extrême (14) ayant une distribution à peu près isotrope des orientations des fibres.

2. Levier d'accélération selon la revendication 1, caractérisé en ce que les orientations des fibres des couches alternent et sont sensiblement symétriques par rapport au plan du mouvement (21).

3. Levier d'accélération selon la revendication 1, caractérisé en ce que la matière thermoplastique est armée de fibres continues de carbone.

4. Levier d'accélération selon la revendication 1, caractérisé en ce que les couches consistent en des structures unidirectionnelles dont la proportion des fibres est d'au moins 50% en volume.

5. Levier d'accélération selon la revendication 1, caractérisé en ce que la matière thermoplastique prévue est du PEEK ou du PPS.

6. Levier d'accélération selon la revendication 1, caractérisé en ce que la partie extrême comporte un oeillet (18) de logement d'un tourillon, l'oeillet formant aussi le coussinet du tourillon.

7. Levier d'accélération selon la revendication 6, caractérisé en ce que l'oeillet de la partie extrême est décalé dans le sens de la charge principale.

8. Levier d'accélération selon la revendication 1, caractérisé en ce qu'une pièce de percussion (34) résistant à l'usure est encastrée dans la partie extrême pour la propulsion directe d'un projectile (32).

9. Levier d'accélération selon la revendication 1, caractérisé en ce que le bras a une forme plane, courbe ou en cuvette et en ce qu'il est conique ou cylindrique.

10. Levier d'accélération selon la revendication 1, caractérisé en ce que le bras est conformé en profilé en caisson.

11. Levier d'accélération selon la revendication 1, caractérisé en ce qu'une fixation radiale au moyeu avec un anneau cunéiforme (51) est prévue.

12. Levier d'accélération selon la revendication 1, caractérisé en ce qu'une fixation axiale au moyeu avec un disque conique (52) est prévue.

13. Levier d'accélération selon la revendication 1, caractérisé en ce que l'épaisseur des couches individuelles est au maximum de 0,3 mm.

14. Levier d'accélération selon la revendication 1, caractérisé en ce que les orientations des fibres des couches les unes par rapport aux autres sont disposées à la manière d'un polygone.

15. Machine à tisser à projectiles équipée d'un levier d'accélération selon l'une des revendications 1 à 14 pour l'accélération du projectile (32).
